(19) Europäisches Patentamt
European Patent Office
Office européen des brevets

(11) EP 4 763 507 A1

(12) EUROPEAN PATENT APPLICATION
published in accordance with Art. 153(4) EPC

(43) Date of publication:
**24.06.2026 Bulletin 2026/26**

(21) Application number: **24826854.2**

(22) Date of filing: **13.05.2024**

(51) International Patent Classification (IPC):
***B32B 1/08*** (2006.01) ***B32B 27/28*** (2006.01)
***B32B 27/30*** (2006.01) ***B41J 2/175*** (2006.01)
***F16L 11/04*** (2006.01)

(52) Cooperative Patent Classification (CPC):
**B32B 1/08; B32B 27/28; B32B 27/30; B41J 2/175; F16L 11/04**

(86) International application number:
**PCT/JP2024/017589**

(87) International publication number:
**WO 2025/037462 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.08.2023 JP 2023132685**

(71) Applicant: **Nitta Corporation**
**Osaka-shi, Osaka 556-0022 (JP)**

(72) Inventor: **HIOKI, Tomoya**
**Nabari-shi, Mie 518-0494 (JP)**

(74) Representative: **Strehl & Partner mbB**
**Maximilianstrasse 54**
**80538 München (DE)**

(54) **MULTILAYER TUBE**

(57) Provided is a multilayer tube having a small kink point radius and improved bending durability. A multilayer tube 10 is a hollow tube, including: a plurality of layers laminated in a thickness direction, in which the plurality of layers includes a first layer 11 that is made of a modified adhesive fluororesin and is formed on an inner peripheral side, a second layer 12 that has a gas barrier property, is made of an ethylene-vinyl alcohol copolymer resin modified with an acetoacetyl group, and is formed on an outer periphery of the first layer 11, and a third layer 13 that is made of a modified polyolefin resin modified with an acidic functional group and is formed on an outer periphery of the second layer 12, and a ratio of a thickness of the second layer 12 to a total thickness of the multilayer tube including the first layer 11, the second layer 12, and the third layer 13 is 6/10 or more.

FIG. 1

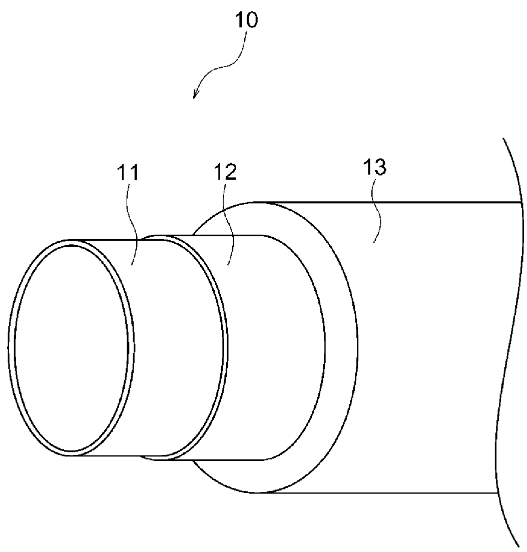


EP 4 763 507 A1

## Description

### Technical Field

The present invention relates to a multilayer tube.

### Background Art

A multilayer tube is used as, for example, an ink supply tube. It is known that when air outside the multilayer tube passes through the thickness of the multilayer tube and reaches the ink inside the multilayer tube, properties and coating accuracy of the ink will be affected. Thus, the gas barrier property is an important aspect in the multilayer tube used as the ink supply tube. In order to ensure the gas barrier property, for example, an ethylene-vinyl alcohol copolymer (hereinafter, also referred to as EVOH) is used as a material forming the multilayer tube.

Patent Literature 1 discloses a multilayer tube including a plurality of layers including an antistatic layer made of a thermoplastic resin and an antistatic agent and a gas barrier layer made of a gas barrier resin, the gas barrier resin being a saponified product of an ethylene-vinyl acetate copolymer.

Patent Literature 2 discloses an ink supply tube including an inner layer made of an ethylene-tetrafluoroethylene copolymer resin or the like, a first intermediate layer made of a polyamide resin, a second intermediate layer made of an ethylene-vinyl alcohol copolymer resin, a third intermediate layer made of a polyolefin resin, and an outer layer made of a thermoplastic resin or an elastomer.

Patent Literature 3 discloses an ink supply tube including a first layer made of an ethylene-tetrafluoroethylene copolymer resin, a second layer made of a modified ethylene-tetrafluoroethylene copolymer resin, a third layer made of a polyamide resin or the like, a fourth layer made of an ethylene-vinyl alcohol copolymer resin, and a fifth layer made of a modified polypropylene resin.

### Citation List

#### Patent Literature

PTL 1: JP 2007-160899 A
PTL 2: WO 2016/186111 A1
PTL 3: JP 2021-94857 A

### Summary of Invention

#### Technical Problem

Since the EVOH has a very hard property as compared with other resin materials for a tube, a tube made of EVOH to improve the gas barrier property is also hard, and thus has a large kink point radius and low bending durability. If the tube has low bending durability, there is a problem that when the tube is used for a portion of a movable pipe or the like which is repeatedly and continuously bent, a crack is more likely to occur due to the bending. When the tube is cracked, the gas barrier property of the tube decreases. In particular, in an ink jet printer, a printing speed is increasing, and high bending durability is required for an ink supply tube used in the ink jet printer.

An object of the present invention is to provide a multilayer tube having a small kink point radius and improved bending durability.

#### Solution to Problem

A multilayer tube according to the present invention is a hollow tube including a plurality of layers laminated in a thickness direction, in which the plurality of layers includes a first layer that is made of a modified adhesive fluororesin and is formed on an inner peripheral side, a second layer that has a gas barrier property, is made of an ethylene-vinyl alcohol copolymer resin modified with an acetoacetyl group, and is formed on an outer periphery of the first layer, and a third layer that is made of a modified polyolefin resin modified with an acidic functional group and is formed on an outer periphery of the second layer, and a ratio of a thickness of the second layer to a total thickness of the multilayer tube including the first layer, the second layer, and the third layer is 6/10 or more.

Advantageous Effects of Invention

According to the present invention, it is possible to provide a multilayer tube having a small kink point radius and improved bending durability.

Brief Description of Drawings

FIG. 1 is a perspective view of an ink supply tube according to the present embodiment with a part omitted.
FIG. 2 is a diagram showing a schematic configuration of a bending rigidity test device.
FIG. 3 is a diagram showing results of a bending rigidity test.

Description of Embodiments

(Embodiment)

Hereinafter, an embodiment of the present invention will be described in detail with reference to the drawings.

(Configuration of Multilayer Tube 10)

FIG. 1 illustrates the multilayer tube 10 having a three-layer structure according to the present embodiment. The multilayer tube 10 has a hollow structure. The multilayer tube 10 includes a first layer 11, a second layer 12, and a third layer 13 in order from an inner peripheral side. The first layer 11 is disposed on an innermost peripheral side, the second layer 12 is formed on an outer periphery of the first layer 11, and the third layer 13 is formed on an outer periphery of the second layer 12.

The first layer 11 is a modified adhesive fluororesin. As the modified adhesive fluororesin forming the first layer 11, one or two or more kinds of adhesive functional groups are introduced into at least an end or a side chain of a homopolymer or a copolymer such as a copolymer having an ethylene (hereinafter, also referred to as "E") unit and a tetrafluoroethylene (hereinafter, also referred to as "TFE") unit (hereinafter, also referred to as an ethylene-tetrafluoroethylene copolymer and also referred to as "ETFE"), a copolymer having a TFE unit and a perfluoro (alkyl vinyl ether) unit, a copolymer having a TFE unit and a hexafluoropropylene unit, and a polymer having a vinylidene fluoride unit. Examples of the adhesive functional group include a carboxyl group, a carboxylic anhydride residue group, an epoxy group, a hydroxyl group, an isocyanate group, an ester group, an amide group, an aldehyde group, an amino group, a hydrolyzable silyl group, a cyano group, a carbon-carbon double bond, a sulfonic acid group, and an ether group.

The modified adhesive fluororesin is excellent in chemical resistance and has a low water absorption, and thus the modified adhesive fluororesin is optimum as a protective material for a gas barrier layer, and can also prevent a decrease in gas barrier property of the gas barrier layer. Among them, the modified ETFE is preferable in terms of chemical resistance and softness required for a tube.

The second layer 12 is made of an ethylene-vinyl alcohol copolymer resin modified with an acetoacetyl group (hereinafter, referred to as "modified EVOH resin").

The modified EVOH resin includes a vinyl alcohol unit represented by the following formula (1), a vinyl acetoacetate unit represented by the following formula (2), and an ethylene unit represented by the following formula (3).

[Chem. 1]

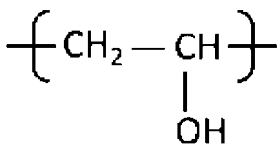

(1)

[Chem. 2]

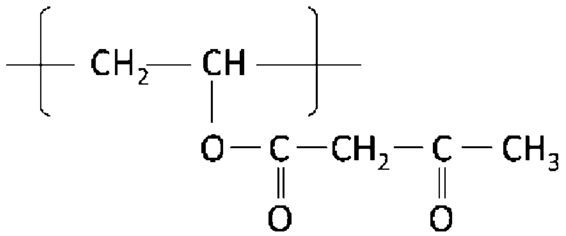

(2)

[Chem. 3]

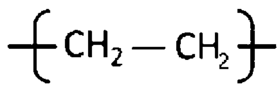

(3)

The modified EVOH resin has a flexural modulus of, for example, 200 [MPa] (ISO178 23°C, 50% RH, 2 mm/min). In addition, the modified EVOH resin has an oxygen permeability coefficient of, for example, 120 [cc. 20 μm/m$^2$. day. atm] (20°C, 65% RH), which is a value larger than 0.27 [cc. 20 μm/m$^2$. day. atm] of 32 mol% EVOH resin, which indicates that the modified EVOH resin has a gas barrier property with respect to oxygen.

The second layer 12 is made of the modified EVOH resin and thus has a gas barrier property. As a rate of the ethylene unit becomes higher, the EVOH resin has a higher flexibility and a lower gas barrier property. As a rate of the vinyl acetoacetate unit becomes higher, the EVOH resin has a lower flexibility and a higher gas barrier property. In consideration of a balance between the flexibility and the gas barrier property, an ethylene composition ratio is preferably 20 mol% or more and 60 mol% or less. Furthermore, from the viewpoint of the flexibility and the gas barrier property, the ethylene composition ratio in the present embodiment is preferably 29 mol% or more and 45 mol% or less.

The third layer 13 is made of a modified polyolefin resin. The modified polyolefin resin is obtained by modifying a polyolefin resin such as a polypropylene resin and a polyethylene resin such as a high density polyethylene resin (HDPE), a low density polyethylene resin (LDPE), a direct chain low density polyethylene resin (LLDPE), and an ultra-low density polyethylene resin (VLDPE) with an acidic functional group, and is preferably obtained by modifying the polyolefin resin with a carboxylic acid or a derivative thereof, for example, can be obtained by introducing acrylic acid, methacrylic acid, maleic acid, fumaric acid, itaconic acid, anhydrides of these acids, or esters of these acids into the polyolefin resin.

The modified polyolefin resin forming the third layer 13 is modified with an acidic functional group, and thus can firmly adhere to the modified EVOH resin. The modified polyolefin resin is used, for example, by co-extrusion with the modified adhesive fluororesin, and in this case, it is preferable to use the modified polypropylene resin because a molding temperature is high.

In the multilayer tube 10, a ratio of a thickness of the second layer 12 to a total thickness of the multilayer tube including the first layer 11, the second layer 12, and the third layer 13 is 6/10 or more. For example, when the total thickness of the multilayer tube is 1.0 mm, the thickness of the second layer 12 is 0.6 mm or more. A total thickness of the first layer 11 and the third layer 13 can be appropriately selected within a range of 0.4 mm or less. For example, when the thickness of the second layer 12 is 0.6 mm, a thickness of the first layer 11 can be 0.1 mm and a thickness of the third layer can be 0.3 mm.

In the multilayer tube 10, the ratio of the thickness of the second layer 12 to the total thickness of the multilayer tube including the first layer 11, the second layer 12, and the third layer 13 is preferably 7/10 or more, and further preferably 8/10 or more. For example, when the total thickness of the multilayer tube is 1.0 mm, the thickness of the second layer 12 is preferably 0.7 mm or more, and further preferably 0.8 mm or more. The total thickness of the first layer 11 and the third layer 13 is preferably 0.3 mm or less, further preferably 0.2 mm or less, and can be appropriately selected within this range. For example, when the thickness of the second layer 12 is 0.7 mm, the thickness of the first layer 11 can be 0.1 mm and the thickness of the third layer can be 0.2 mm. For example, when the thickness of the second layer 12 is 0.8 mm, the thickness of the first layer 11 can be 0.1 mm, and the thickness of the third layer can be 0.1 mm.

The second layer 12 is made of the modified EVOH resin, and thus can secure the gas barrier property of the multilayer tube 10.

The first layer 11 is made of a modified ETFE resin, and thus the multilayer tube 10 has a chemical resistance and a low moisture permeability. For example, when the multilayer tube 10 is applied to an ink supply tube, the multilayer tube 10 can prevent color residue of ink.

The third layer 13 is made of the modified polyolefin resin into which an acidic functional group is introduced, and

thus a bonding strength with the second layer 12 can be improved. The third layer 13 is made of the modified polyolefin resin into which an acidic functional group is introduced, thereby preventing a decrease in transparency. For example, when the multilayer tube 10 is applied to an ink supply tube, ink flowing inside can be better visually recognized from the outside. The third layer 13 is made of the modified polyolefin resin, and thus moldability can be improved.

(Operation and Effect of Multilayer Tube 10)

The multilayer tube 10 of the present embodiment has the second layer 12 made of the modified EVOH resin, and the ratio of the thickness of the second layer 12 to the total thickness of the multilayer tube including the first layer 11, the second layer 12, and the third layer 13 is 6/10 or more.

The modified EVOH resin forming the second layer 12 is softer than the EVOH resin and has a gas barrier property. The modified EVOH resin instead of the EVOH resin is used in the second layer 12 for obtaining the gas barrier property, and thus the multilayer tube 10 does not become too hard. In addition, the gas barrier property of the multilayer tube 10 can be secured by setting the thickness of the second layer 12 made of the modified EVOH resin in the above-described range. The multilayer tube 10 of the present embodiment is softer than a multilayer tube made of an EVOH resin as a gas barrier layer. Therefore, the multilayer tube 10 of the present embodiment is a multilayer tube having a small kink point radius and improved bending durability.

The multilayer tube 10 of the present embodiment can be used for transporting a fluid such as gas or liquid containing water or an organic solvent, or powders. The multilayer tube 10 of the present embodiment can secure the gas barrier property by the second layer 12, which can prevent the oxidation of a fluid or the like retained inside the multilayer tube 10, the evaporation of a solvent, and the like. The multilayer tube 10 of the present embodiment can be applied to an ink supply tube that is particularly required to have a gas barrier property. Ink to be supplied can be applied to an aqueous ink or an oilbased ink. The multilayer tube 10 of the present embodiment has a small kink point radius and improved bending durability, and thus can be particularly and preferably applied to an ink supply tube of an ink jet printer, and as ink jet printers continue to print faster, it is possible to extend a replacement cycle and to install tubes in narrow spaces.

(Method for Manufacturing Multilayer Tube 10)

Next, a method for manufacturing the multilayer tube 10 as described above will be described. For example, the multilayer tube 10 can be molded in one step by simultaneously extruding three types of resins forming the first layer 11, the second layer 12, and the third layer 13 and laminating the three types of resins into a cylindrical shape. The first layer 11 as an inner layer can be formed by an inner layer extruder, the second layer 12 can be formed on an outer peripheral surface of the first layer 11 by an outer layer extruder, and then the third layer 13 can be formed on an outer peripheral surface of the second layer 12 by the outer layer extruder.

(Examples)

Next, examples and comparative examples of the multilayer tube 10 of the above-described embodiment will be described.

Here, the first layer 11 was set as an innermost layer, and the second layer 12 and the third layer 13 were formed by the co-extrusion molding from the outside of the first layer to prepare a sample of a multilayer tube according to Example 1 having a configuration shown in Table 1. A modified ETFE resin was used as a material of the first layer 11. A modified EVOH resin was used as a material of the second layer 12. A modified polyolefin resin modified with an acidic functional group was used as a material of the third layer 13. A multilayer tube having a three-layer structure was molded by extruding three types of resins simultaneously by the co-extrusion molding. The sizes of multilayer tubes were all 6 mm in outer diameter and 4 mm in inner diameter, a total thickness of the first layer 11 to the third layer 13 was 1 mm (that is, (6 mm - 4 mm)/2 = 1 mm), and thicknesses of the first layer 11, the second layer 12, and the third layer 13 were as shown in Table 1.

In the same manner as in Example 1, samples of multilayer tubes according to Example 2, Example 3, Comparative Example 4, and Comparative Example 5 were prepared by changing a thickness of each layer as shown in Table 1.

A sample of a multilayer tube according to Comparative Example 1 having a configuration shown in Table 1 was prepared using a modified ETFE resin as a material of a first layer, PA612 as a material of a second layer, an EVOH resin as a material of a third layer, PA612 as a material of a fourth layer, and a modified polyolefin as a material of a fifth layer.

A commercially available multilayer tube having a configuration shown in Table 1 was used as a multilayer tube according to Comparative Example 2.

A sample of a multilayer tube according to Comparative Example 3 having a configuration shown in Table 1 was prepared using a modified ETFE resin as a material of a first layer and a mixture of PA11 and PA12 as a material of a second layer.

As shown in Table 1, in the multilayer tube of Example 1, the second layer was made of the modified EVOH resin, and a ratio of the thickness (0.6 mm) of the second layer to the total thickness (1.0 mm) of the multilayer tube including the first layer, the second layer, and the third layer is 6/10. In the multilayer tube of Example 2, a ratio of a thickness (0.7 mm) of the second layer to a total thickness (1.0 mm) of the multilayer tube is 7/10. In the multilayer tube of Example 3, a ratio of a thickness (0.8 mm) of the second layer to a total thickness (1.0 mm) of the multilayer tube is 8/10. The multilayer tubes of Comparative Examples 1 to 3 do not have a layer made of the modified EVOH resin. In the multilayer tubes of Comparative Examples 4 and 5, the second layer is made of the modified EVOH resin, and a ratio of a thickness of the second layer to a total thickness (1.0 mm) of the multilayer tube is less than 6/10.

[Table 1]

| | Material/thickness | | | | |
|---|---|---|---|---|---|
| | First layer (inner peripheral side) | Second layer | Third layer | Fourth layer | Fifth layer (outer peripheral side) |
| Example 1 | Modified ETFE /0.1 mm | Modified EVOH /0.6 mm | Modified polypropylene 10.3 mm | - | - |
| Example 2 | Modified ETFE /0.1 mm | Modified EVOH /0.7 mm | Modified polypropylene 10.2 mm | - | - |
| Example 3 | Modified ETFE /0.1 mm | Modified EVOH /0.8 mm | Modified polypropylene /0.1 mm | - | - |
| Comparative Example 1 | Modified ETFE /0.2 mm | PA612 /0.1 mm | EVOH /0.05 mm | PA612 /0.1 mm | Modified polypropylene /0.67 mm |
| Comparative Example 2 | Modified ETFE /0.1 mm | Adhesive layer /0.05 mm | EVOH /0.05 mm | Adhesive layer /0.05 mm | Olefin /0.75 mm |
| Comparative Example 3 | Modified ETFE /0.2 mm | PA11+PA12 /0.8 mm | | | - |
| Comparative Example 4 | Modified ETFE /0.1 mm | Modified EVOH /0.1 mm | Modified polypropylene /0.8 mm | - | - |
| Comparative Example 5 | Modified ETFE /0.1 mm | Modified EVOH /0.25 mm | Modified polypropylene /0.65 mm | - | - |

A total of eight types of multilayer tubes of Examples 1 to 3 and Comparative Examples 1 to 5 having the configuration shown in Table 1 were evaluated for bending rigidity, a gas barrier property, bending durability, and transparency. Results of these evaluations are shown in Table 2.

(Bending Rigidity Test)

The samples of the multilayer tubes of Examples 1 to 3 and Comparative Examples 1 to 5 were subjected to a bending rigidity test. The bending rigidity test was performed using a bending rigidity test device 31 shown in FIG. 2. First, a sample of each multilayer tube was left to stand in a constant temperature and humidity chamber (23°C, 50% RH) for 24 hours or longer, and then attached to the bending rigidity test device 31. The multilayer tube was cut to a length obtained according to length (mm) = $\pi$ (R + OD/2) + (2 $\times$ OD). Here, R represents a tube bending radius (mm) at the start of the test, and OD represents a tube outer diameter (mm), which was set to 336 mm in this test. By moving a movable portion 33 provided on a rail toward a fixing portion 32 at a speed of 100 mm/min, the multilayer tube 10 was gradually bent, and a bending radius (mm) with respect to a bending load (N) was examined.

FIG. 3 is a diagram showing results of the bending rigidity test. A vertical axis represents the bending load (N), and a horizontal axis represents the bending radius (mm). Example 1 is indicated by a point x, Example 2 is indicated by a graph a, Example 3 is indicated by a graph b, Comparative Example 1 is indicated by a graph c, Comparative Example 2 is indicated by a graph d, Comparative Example 3 is indicated by a graph e, Comparative Example 4 is indicated by a graph f, and Comparative Example 5 is indicated by a graph g.

A kink point radius of the multilayer tubes of Examples 1 to 3 and Comparative Examples 1 to 5 were examined. The kink point radius is a bending radius of the multilayer tube 10 when a kink occurs in the multilayer tube 10. The number of tests was 5, and an average of the kink point radius of examples and comparative examples was obtained. A case in

which the kink point radius is smaller than that of the multilayer tube of Comparative Example 1 (11.0 mm or less) is evaluated as "⊙", a case in which the kink point radius is equivalent to that of the multilayer tube of Comparative Example 1 (more than 11.0 mm and 13.6 mm or less) is evaluated as "O", and a case in which the kink point radius is larger than that of the multilayer tube of Comparative Example 1 (more than 13.6 mm) is evaluated as "×". Results are shown in a "Bending rigidity" column in Table 2.

In FIG. 3, the point x indicates the kink point radius of the multilayer tube of Example 1. A broken line indicated by "13.6 mm (Comparative Example 1)" in FIG. 3 indicates the kink point radius of Comparative Example 1. As shown in FIG. 3, it was confirmed that a bending radius of a peak of the graph of the multilayer tubes of Examples 2 to 3 was smaller than that of the multilayer tube of Comparative Example 1, for example. As shown in Table 2, it was confirmed that the kink point radius of the multilayer tubes of Examples 1 to 3 was smaller than that of the multilayer tube of Comparative Example 2. From these facts, it was confirmed that the multilayer tubes of Examples 1 to 3 were less likely to be broken than the multilayer tubes of Comparative Examples 1 and 2.

(Gas Barrier Property Test)

The multilayer tubes of Examples 1 to 3 and Comparative Examples 1 and 3 were subjected to a gas barrier property test. A dissolved oxygen saturation rate in the gas barrier property test was measured by a dissolved oxygen meter (TD-51 manufactured by TOKO KAGAKU KENKYUJO, [Polarographic method]). In the gas barrier property test, a gas barrier property was evaluated by placing a deaerated toluene solvent in a sample of each multilayer tube, sealing both ends hermetically, leaving the sample to stand in an environment with a temperature of 23°C and a humidity of 50%, and then measuring a dissolved oxygen saturation rate of the deaerated toluene solvent in the multilayer tube. The dissolved oxygen saturation rate was measured 7 days after the start of the test. The dissolved oxygen saturation rate was calculated according to the following equation, wherein Omin represents a dissolved oxygen amount in deaerated toluene until the dissolved oxygen amount is stabilized, Omax represents a dissolved oxygen amount in oxygen-saturated toluene, and Otest represents a dissolved oxygen amount in the gas barrier property test.

$$\text{Dissolved oxygen saturation rate (\%)} = (\text{Otest} - \text{Omin})/(\text{Omax} - \text{Omin}) \times 100$$

Toluene was deaerated by reducing a pressure under ultrasonic irradiation. The oxygen-saturated toluene was prepared by aerating toluene and saturating the aerated toluene until an increase in the dissolved oxygen amount became stable. The lower the dissolved oxygen saturation rate, the higher the gas barrier property of the multilayer tube.

For the multilayer tubes of Examples 1 to 3 and Comparative Examples 1 and 3, the dissolved oxygen saturation rates after 7 days from the start of the gas barrier property test were shown in Table 2. Here, reference values for the dissolved oxygen saturation rate after 7 days were set to 50% and 10%, a case in which the dissolved oxygen saturation rate is 10% or less is evaluated as "⊙", a case in which the dissolved oxygen saturation rate is more than 10% and 50% or less is evaluated as "○", and a case in which the dissolved oxygen saturation rate is more than 50% is evaluated as "×". Results were shown in a "Gas barrier property" column in Table 2.

As shown in Table 2, it was confirmed that the gas barrier property of the multilayer tubes of Examples 1 to 3 was as good as that of the multilayer tube of Comparative Example 1.

(Bending Durability Test)

The multilayer tubes of Examples 1 to 3 and Comparative Examples 1, 2, 4, and 5 were subjected to a bending durability test. In the bending durability test, the samples of the multilayer tubes of Examples 1 to 3 and Comparative Examples 1, 2, 4, and 5 were bent under conditions that a sample is attached to a bending durability tester, and a test temperature is 23°C, a sample length is 300 mm, no liquid is sealed, a curvature at the time of bending is R40, a bending speed is 300 times/min, and a stroke length is 140 mm, and the number of times of bending until a crack occurs was counted. Here, one bending was counted as one round trip.

For the multilayer tubes of Examples 1 to 3 and Comparative Examples 1, 2, 4, and 5, the number of times of bending until a crack occurs was shown in Table 2. Here, a reference value of the number of times of bending until a crack occurs is set to 470,000 times, a case in which the number of times of bending exceeds the reference value is evaluated as "○", and a case in which the number of times of bending is equal to or less than the reference value is evaluated as "×". Results are shown in a "Bending durability" column in Table 2.

As shown in Table 2, it was confirmed that the bending durability of the multilayer tubes of Examples 1 to 3 was better than that of the multilayer tubes of Comparative Examples 1, 2, 4, and 5.

(Transparency Test)

The samples of the multilayer tubes of Examples 1 to 3 and Comparative Examples 1 to 5 were subjected to a transparency test. The transparency test was performed by sealing toluene in a sample of each multilayer tube and determining whether a level gauge could detect (respond to) a liquid level of the sealed toluene. The evaluation was performed using the level gauge (EE-SPX613 manufactured by OMRON Corporation) in a sensitivity set to Low.

The presence or absence of the response in the level gauge for the multilayer tubes of Examples 1 to 3 and Comparative Examples 1 to 5 is shown in Table 2. Here, a case in which there is a response in the level gauge is evaluated as "○", and a case in which there is no response in the level gauge is evaluated as "×". Results are shown in a "Transparency" column in Table 2.

As shown in Table 2, it was confirmed that the transparency of the multilayer tubes of Examples 1 to 3 was as good as that of Comparative Examples 2 to 5.

[Table 2]

| Item | Reference | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|
| Bending rigidity | Kink point radius 11.0 mm or less ⊙ more than 11.0 mm and 13.6 mm or less ○ | ○ | ⊙ | ⊙ | ○ | × | ○ | × | × |
| Gas barrier property | Dissolved oxygen saturation rate 10% or less ⊙ more than 10% and 50% or less ○ | ⊙ | ⊙ | ⊙ | ○ | - | × | - | - |
| Bending durability | number of times of bending until crack occurs 470,000 times or more ○ | ○ | ○ | ○ | × | × | - | × | × |
| Transparency | Response in level gauge Response presence ○ | ○ | ○ | ○ | × | ○ | ○ | ○ | ○ |

As described above, the multilayer tubes of Examples 1 to 3 exhibited good results in bending rigidity, gas barrier property, bending durability, and transparency. The multilayer tube of Comparative Example 1 had good bending rigidity and gas barrier property, but had poor bending durability and transparency. The multilayer tube of Comparative Example 2 had good transparency, but had poor bending rigidity and bending durability. The multilayer tube of Comparative Example 3 had good bending rigidity and transparency, but had poor gas barrier property. The multilayer tube of Comparative Example 4 had good transparency, but had poor bending rigidity and bending durability. The multilayer tube of Comparative Example 5 had good transparency, but had poor bending rigidity and bending durability. From these facts, it can be said that the multilayer tubes of Examples 1 to 3 are comprehensively evaluated higher than the multilayer tubes of Comparative Examples 1 to 5.

The present invention is not limited to the above-described embodiment, and can be appropriately modified within the scope of the gist of the present invention. Further, an innermost peripheral layer made of an unmodified ethylene-tetrafluoroethylene copolymer resin may be provided on the inner peripheral side of the first layer 11. Further, an intermediate layer made of polyamide or the like may be provided between the first layer 11 and the second layer 12.

Reference Signs List

- 10: multilayer tube
- 11: first layer
- 12: second layer
- 13: third layer
- 31: bending rigidity test device
- 32: fixing portion
- 33: movable portion

## Claims

**1.** A multilayer tube that is a hollow tube, comprising:

a plurality of layers laminated in a thickness direction, wherein
the plurality of layers includes

a first layer that is made of a modified adhesive fluororesin and is formed on an inner peripheral side,
a second layer that has a gas barrier property, is made of an ethylene-vinyl alcohol copolymer resin modified with an acetoacetyl group, and is formed on an outer periphery of the first layer, and
a third layer that is made of a modified polyolefin resin modified with an acidic functional group and is formed on an outer periphery of the second layer, and

a ratio of a thickness of the second layer to a total thickness of the multilayer tube including the first layer, the second layer, and the third layer is 6/10 or more.

**2.** The multilayer tube according to claim 1, wherein
the ratio of the thickness of the second layer to the total thickness of the multilayer tube including the first layer, the second layer, and the third layer is 7/10 or more.

**3.** The multilayer tube according to claim 1, wherein
the ratio of the thickness of the second layer to the total thickness of the multilayer tube including the first layer, the second layer, and the third layer is 8/10 or more.

**4.** The multilayer tube according to claim 1, wherein
the ethylene-vinyl alcohol copolymer resin modified with an acetoacetyl group includes a vinyl alcohol unit represented by the following formula (1), a vinyl acetoacetate unit represented by the following formula (2), and an ethylene unit represented by the following formula (3).

[Chem. 4]

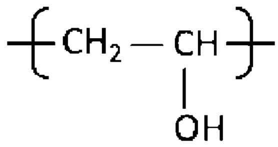

(1)

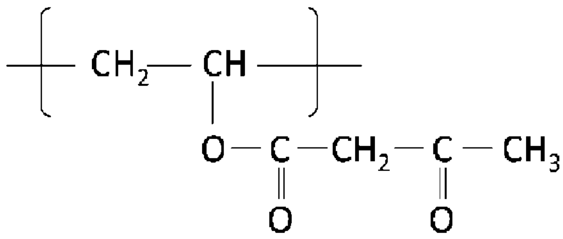

(2)

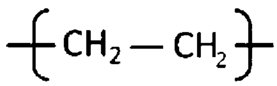

(3)

5. The multilayer tube according to any one of claims 1 to 4, wherein the modified adhesive fluororesin is a modified ethylene-tetrafluoroethylene copolymer resin.

6. The multilayer tube according to any one of claims 1 to 4, wherein the modified polyolefin resin is a modified polypropylene resin.

7. The multilayer tube according to any one of claims 1 to 4, wherein the modified adhesive fluororesin is a modified ethylene-tetrafluoroethylene copolymer resin, and the modified polyolefin resin is a modified polypropylene resin.

FIG. 1

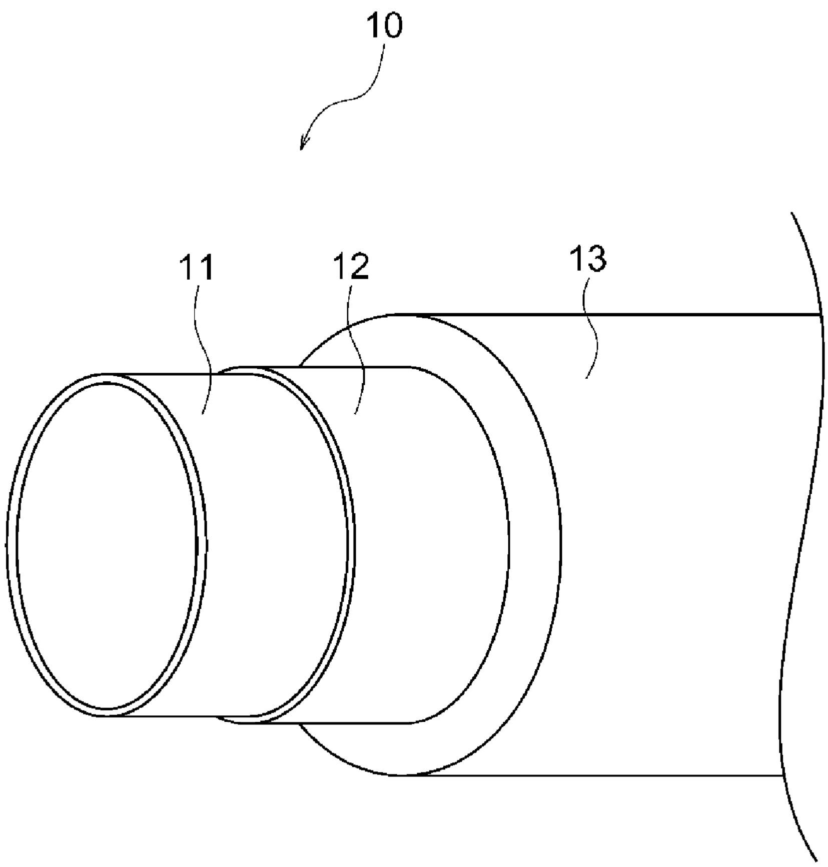

FIG. 2

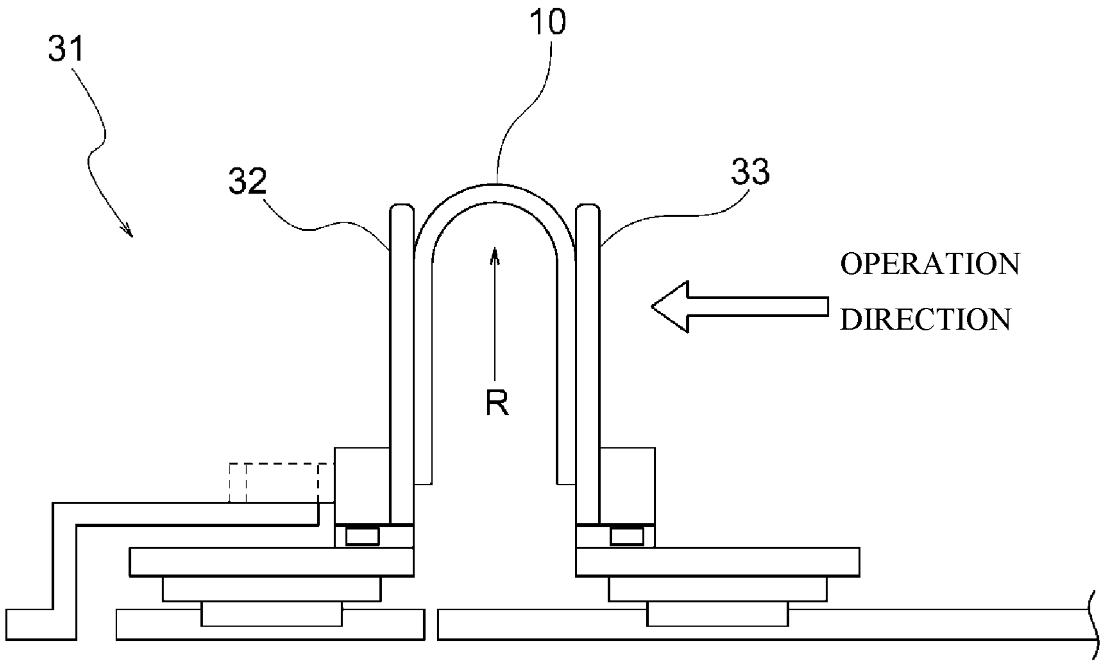

FIG. 3

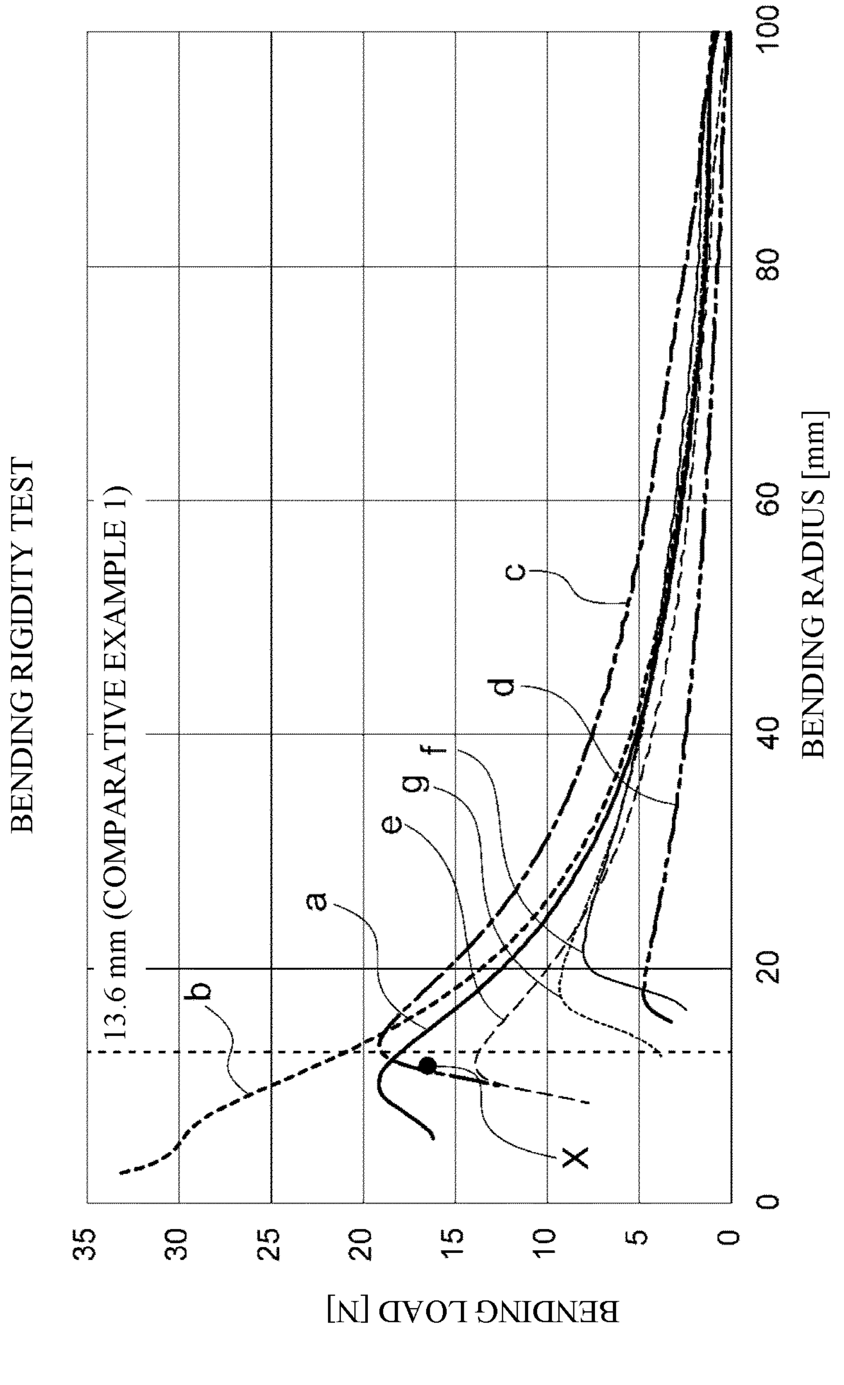
BENDING RIGIDITY TEST
13.6 mm (COMPARATIVE EXAMPLE 1)
BENDING LOAD [N]
35
30
25
20
15
10
5
0
BENDING RADIUS [mm]
0
20
40
60
80
100
a
b
c
d
e
f
g
X

**INTERNATIONAL SEARCH REPORT**

International application No.
**PCT/JP2024/017589**

**A. CLASSIFICATION OF SUBJECT MATTER**

***B32B 1/08***(2006.01)i; ***B32B 27/28***(2006.01)i; ***B32B 27/30***(2006.01)i; ***B41J 2/175***(2006.01)i; ***F16L 11/04***(2006.01)i
FI: B32B1/08 B; B32B27/28 102; B32B27/30 D; B41J2/175 503; F16L11/04

According to International Patent Classification (IPC) or to both national classification and IPC

**B. FIELDS SEARCHED**

Minimum documentation searched (classification system followed by classification symbols)

B32B1/08; B32B27/28; B32B27/30; B41J2/175; F16L11/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-29574 A (UBE INDUSTRIES, LTD.) 02 February 2006 (2006-02-02) | 1-7 |
| A | WO 2014/021422 A1 (THE NIPPON SYNTHETIC CHEMICAL INDUSTRY CO., LTD.) 06 February 2014 (2014-02-06) | 1-7 |
| A | WO 02/092643 A1 (KURARAY CO., LTD.) 21 November 2002 (2002-11-21) | 1-7 |
| A | WO 2019/059243 A1 (JUNKOSHA INC.) 28 March 2019 (2019-03-28) | 1-7 |
| A | WO 2021/125233 A1 (NITTA CORPORATION) 24 June 2021 (2021-06-24) | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/017589**

| Patent document cited in search report | Publication date (day/month/year) | Patent family member(s) | Publication date (day/month/year) |
|---|---|---|---|
| JP 2006-29574 A | 02 February 2006 | (Family: none) | |
| WO 2014/021422 A1 | 06 February 2014 | US 2015/0140247 A1 | |
| | | EP 2881639 A1 | |
| | | CN 104520624 A | |
| WO 02/092643 A1 | 21 November 2002 | US 2004/0096683 A1 | |
| | | EP 1403289 A1 | |
| | | KR 10-0894024 B1 | |
| | | CN 1464883 A | |
| WO 2019/059243 A1 | 28 March 2019 | US 2020/0262170 A1 | |
| | | EP 3677432 A1 | |
| | | KR 10-2020-0036940 A | |
| | | CN 111107998 A | |
| WO 2021/125233 A1 | 24 June 2021 | US 2023/0023875 A1 | |
| | | CN 114761721 A | |
| | | KR 10-2022-0114035 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007160899 A
- WO 2016186111 A1
- JP 2021094857 A